# EUROPÄISCHE PATENTSCHRIFT

(11) **EP 3 815 163 B1**
(45) Veröffentlichungstag und Bekanntmachung des Hinweises auf die Patenterteilung: **20.05.2026**
(21) Anmeldenummer: 19740318.1
(22) Anmeldetag: 01.07.2019
(51) Int. Cl.: H01M 50/50, H01M 50/569, H01M 10/6556

(54) **TEMPERIERUNGSELEMENT ZUM TEMPERIEREN EINES ELEKTRISCHEN ENERGIESPEICHERS**
TEMPERATURE-CONTROL ELEMENT FOR CONTROLLING THE TEMPERATURE OF AN ELECTRICAL ENERGY ACCUMULATOR
ÉLÉMENT DE RÉGULATION DE TEMPÉRATURE POUR RÉGULER LA TEMPÉRATURE D'UN DISPOSITIF DE STOCKAGE D'ÉNERGIE ÉLECTRIQUE

(30) Priorität: 29.06.2018 DE 102018115791
(43) Veröffentlichungstag der Anmeldung: 05.05.2021
(73) Patentinhaber: Webasto SE, 82131 Stockdorf (DE)
(72) Erfinder: HAUSSMANN, Jochen, 82131 Stockdorf (DE)
(74) Vertreter: Nordmeyer, Philipp Werner
(86) Internationale Anmeldenummer: PCT/EP2019/067541
(87) Internationale Veröffentlichungsnummer: WO 2020/002699

(56) Entgegenhaltungen:
- DE-A1- 102014 001 975
- DE-A1- 102015 214 661
- DE-A1- 3 731 669
- DE-U1- 20 205 200
- DE-U1- 9 406 559

## Beschreibung

### Technisches Gebiet

Die vorliegende Erfindung betrifft ein Temperierungselement zum Temperieren eines elektrischen Energiespeichers, insbesondere zum Temperieren einer Traktionsbatterie eines Fahrzeugs, beispielsweise in einem Personenkraftfahrzeug, einem Lastwagen oder sonstigen Nutzfahrzeugen.

### Stand der Technik

Zum Temperieren elektrischer Energiespeicher in Kraftfahrzeugen, insbesondere zum Temperieren von Traktionsbatterien für Fahrzeuge, sind Temperierungselemente bekannt, welche einen Temperierungsmedienkanal aufweisen, durch welchen hindurch in einer Strömungsrichtung ein Temperierungsmedium fließen kann. Mittels des Temperierungsmediums ist es möglich, das Temperierungselement auf eine durch das Temperierungsmedium vorgegebene Temperatur zu bringen beziehungsweise in der Nähe dieser durch das Temperierungsmedium vorgegebenen Temperatur zu halten. So kann dem elektrischen Energiespeicher Wärme zugeführt werden oder von diesem Wärme abgeführt werden, um den elektrischen Energiespeicher entsprechend zu heizen oder zu kühlen.

Elektrische Energiespeicher für Fahrzeuge und insbesondere Traktionsbatterien weisen einen bevorzugten Temperaturbereich beziehungsweise Temperaturfenster auf, in welchem sie effizient oder überhaupt zu betreiben sind. Entsprechend kann es beispielsweise im Winter notwendig sein, eine Traktionsbatterie vor ihrem eigentlichen Betrieb vorzuheizen, um die gewünschte Leistung abrufen zu können. Bei hohen Leistungsanforderungen, beispielsweise beim Laden oder Entladen, oder bei einer hohen Umgebungstemperatur kann es hingegen notwendig sein, eine Traktionsbatterie zu kühlen, um eine Überhitzung und damit einen nicht effizienten Betrieb oder eine Beschädigung der Traktionsbatterie zu vermeiden.

Aus der DE 10 2014 001 975 A1 ist beispielsweise ein Temperierungselement zum Temperieren einer Fahrzeugbatterie bekannt, welches einen entlang einer Strömungsrichtung ausgebildeten Hohlraum zur Führung eines Temperierungsmediums definiert und welches im Strangpressverfahren hergestellt werden kann.

### Darstellung der Erfindung

Ausgehend von dem bekannten Stand der Technik ist es eine Aufgabe der vorliegenden Erfindung, ein Temperierungselement zum Temperieren eines elektrischen Energiespeichers anzugeben, mittels welchem eine möglichst effiziente Temperierung eines Batteriesystems ermöglicht wird.

Diese Aufgabe wird durch ein Temperierungselement zum Temperieren eines elektrischen Energiespeichers mit den Merkmalen des Anspruchs 1 gelöst. Vorteilhafte Weiterbildungen ergeben sich aus den Unteransprüchen, der vorliegenden Beschreibung sowie den Figuren.

Entsprechend wird ein Temperierungselement zum Temperieren eines elektrischen Energiespeichers, insbesondere zum Temperieren einer Traktionsbatterie eines Fahrzeugs, vorgeschlagen, umfassend ein sich in einer Extrusionsrichtung erstreckendes Strangpressprofil, welches einen Temperierungsmedienkanal zur Durchströmung mit einem Temperierungsmedium aufweist. Erfindungsgemäß ist eine in dem Temperierungsmedienkanal einstückig mit dem Strangpressprofil ausgebildete Leitschaufel vorgesehen.

Dadurch, dass in dem Temperierungsmedienkanal eine einstückig mit dem Strangpressprofil ausgebildete Leitschaufel vorgesehen ist, kann ein besonders effizientes und einfaches Temperieren des elektrischen Energiespeichers erreicht werden, da durch die Leitschaufel Verwirbelungen des den Temperierungsmedienkanal durchfließenden Temperierungsmediums hervorgerufen werden und damit über das Temperierungselement hinweg eine möglichst homogene Wärmeaufnahme beziehungsweise Wärmeabgabe erreicht wird, bei der die Wärmetransportfähigkeit des Temperierungsmediums bestmöglich ausgenutzt wird.

Die Strömungsrichtung des Temperierungsmediums stimmt im Wesentlichen mit der Längserstreckung des Strangpressprofils und damit auch mit der Extrusionsrichtung E des Strangpressprofils überein.

Dadurch, dass die Leitschaufel einstückig mit dem Strangpressprofil, welches den Temperierungsmedienkanal ausbildet, ausgebildet ist, kann weiterhin erreicht werden, dass bei der Montage oder anderen Verarbeitungsschritten sowie im Betrieb des Temperierungselements ein fehlerhaftes Einbauen separater Leitschaufeln beziehungsweise ein Verrutschen, Verschieben oder Herauslösen der Leitschaufeln vermieden werden kann. Damit kann sichergestellt werden, dass die Temperaturverteilung, für welche das jeweilige Temperierungselement ursprünglich ausgelegt war, auch erreicht werden kann.

Damit können auch die geometrische Varianz und die Fehlermöglichkeiten beim Aufbau und Einbau des Temperierungselements reduziert werden und damit die Qualität des Temperierungselements insgesamt erhöht werden.

Insbesondere kann durch die einstückige, mit dem Strangpressprofil ausgebildete Anordnung der Leitschaufel erreicht werden, dass bei der Montage ein Monteur oder Werker Leitschaufeln nicht fehlerhaft beziehungsweise in einer falschen Position montiert und dadurch das Temperaturverhalten eines Temperierungselements zu Temperieren eines elektrischen Energiespeichers negativ beeinflusst.

In diesem Zusammenhang ist zu beachten, dass gerade elektrische Energiespeicher sehr sensibel auf eine inhomogene oder nicht vorgesehene oder fehlerhafte Temperaturverteilung eines Temperierungselements reagieren. Dies ist insbesondere deshalb der Fall, da die ungewollt mit einer geringeren Temperierungsleistung versehene Batteriezellen einer schnelleren Alterung unterliegen können, als vergleichbare, tatsächlich mit einer vorgesehenen Temperierungsleistung versehene Batteriezellen. Entsprechend ist bei einer zu geringen Homogenität der Temperierungsleistung eines Temperierungselements zur Temperierung eines elektrischen Energiespeichers die Gefahr gegeben, dass die mit einer geringen Homogenität auf diese Weise temperierte Batterie eine insgesamt geringere Lebensdauer aufweist, als dies bei einer homogeneren Temperierung der Fall wäre.

Die Leitschaufel kann eine sich quer zur Extrusionsrichtung erstreckende Dimension aufweisen, um auf diese Weise eine besonders starke Verwirbelung oder Störung des Temperierungsmedienstroms zu erreichen.

Die direkte Integration der Leitschaufeln in das Strangpressprofil und damit auch in den Temperierungsmedienkanal resultiert in einem robusten, sicheren und servicefreien Temperierungselement, in welchem die Verwirbelungselemente einstückig mit dem Temperierungselement ausgebildet sind.

Vorzugsweise ragen die Leitschaufeln entlang der Strömungsrichtung betrachtet bezüglich einer senkrecht zur Strömungsrichtung liegenden Dimension in den Temperierungsmedienkanal hinein. Entsprechend findet eine besonders effiziente Verwirbelung des Temperierungsmediums im Temperierungsmedienkanal dadurch statt, dass eine Störung eingebaut wird, welche sich senkrecht zur vorgesehenen Strömungsrichtung erstreckt.

Eine durch die Leitschaufel ausgebildete Ebene kann mit der Extrusionsrichtung einen Winkel einschließen, insbesondere einen Winkel zwischen 10° und 170°. Auf diese Weise kann eine besonders flexible Ausgestaltung der Leitschaufel erreicht werden, mittels welcher das Temperierungselement an die jeweils vorgegebene oder gewünschte Temperaturverteilung angeglichen wird.

In dem Temperierungsmedienkanal ist ein sich in Extrusionsrichtung erstreckender, einstückig mit dem Strangpressprofil ausgebildeter Steg angeordnet und die Leitschaufel ist einstückig mit dem Steg ausgebildet. Damit lässt sich die Leitschaufel an einer gewünschten Stelle im Temperierungsmedienkanal ausbilden.

Dabei ist die Leitschaufel durch einen sich im Wesentlichen senkrecht zur Extrusionsrichtung erstreckenden ersten Schnitt in dem Steg und durch einen sich im Wesentlichen in Extrusionsrichtung erstreckenden zweiten Schnitt in dem Steg definiert und die Leitschaufel ist entlang einer Biegekante einstückig mit dem Steg verbunden. So kann eine besonders einfache und effiziente Herstellung der Leitschaufeln in dem Strangpressprofil erreicht werden, so dass die Leitschaufeln an einer festgelegten Position in dem Strangpressprofil vorgesehen sind und damit eine Sicherheit bei der Montage erreicht werden kann.

Zum Ausbilden der Leitschaufeln können auch zwei sich in Extrusionsrichtung erstreckende zweite Schnitte in dem Steg vorgesehen sein, die gegenüberliegende Seiten der Leitschaufel definieren. Damit kann eine fensterartige Ausbildung der Leitschaufel erreicht werden, die insbesondere bei einer höheren Ausbildung des Stegs oder bei einer den Temperierungsmedienkanal durchspannenden Ausbildung des Stegs vorteilhaft sind.

Eine durch die Leitschaufel ausgebildete Ebene kann mit der durch den Steg ausgebildeten Ebene einen Winkel einschließen, insbesondere einen Winkel zwischen 10° und 170°. Auf diese Weise kann eine besonders flexible Ausgestaltung der Leitschaufel erreicht werden, mittels welcher das Temperierungselement an die jeweils vorgegebene oder gewünschte Temperaturverteilung angeglichen wird.

Eine homogene Ausbildung der Verwirbelungen kann dadurch erreicht werden, dass mindestens zwei Leitschaufeln vorgesehen sind, die parallel zueinander ausgerichtete Ebenen ausbilden.

In dem Temperierungsmedienkanal können auch mehrere Leitschaufeln einstückig mit dem Strangpressprofil ausgebildet sein, um auf diese Weise durch die Leitschaufeln eine geeignete Rippenstruktur im Temperierungsmedienkanal auszubilden

Durch die einstückige Ausbildung der Leitschaufeln mit dem Strangpressprofil kann eine positionsstabile Ausführung und damit auch eine langfristig gesicherte Funktionsstabilität erreicht werden.

Entsprechend entfällt durch die Implementierung der Leitschaufeln direkt in dem Halbzeug beziehungsweise in dem Strangpressprofil, welches ein Teil des Temperierungselements ausbildet, das Einbringen von zusätzlichen Bauteilen einschließlich deren Montage und des Fixierungsaufwands. Damit kann das Temperierungselement insgesamt effizienter und kostengünstiger hergestellt werden.

Die Leitschaufel kann in ihrer Position und Geometrie an die jeweilige gewünschte Ausführung einfach dadurch angepasst werden, dass unterschiedliche Flächen und unterschiedliche Winkelstellungen ausgebildet werden können, welche entsprechend die für die gewünschte Verwirbelung des Temperierungsmediums von Bedeutung sein können und die entsprechende Funktionalität ausbilden können.

Der Temperierungsmedienkanal ist besonders bevorzugt einstückig ausgebildet. Mit anderen Worten stellt das Strangpressprofil ein geschlossenes Profil dar, welches den Temperierungsmedienkanal zumindest in Extrusionsrichtung und damit auch in Strömungsrichtung vollständig umschließt. Lediglich an den Stirnseiten ist das Strangpressprofil offen und ein Zugang zu dem Temperierungsmedienkanal ist nur über die Stirnseiten vorgesehen.

Die oben beschriebene Aufgabe wird auch durch ein Verfahren mit den Merkmalen des Anspruchs 9 gelöst. Vorteilhafte Weiterbildungen ergeben sich durch die vorliegende Beschreibung, die Figuren und die Unteransprüche.

Entsprechend wird ein Verfahren zum Bereitstellen eines Temperierungselements zum Temperieren eines elektrischen Energiespeichers, insbesondere zum Temperieren einer Traktionsbatterie eines Fahrzeuges, vorgeschlagen, wobei ein sich in einer Extrusionsrichtung erstreckendes Strangpressprofil bereit gestellt wird, welches einen Temperierungsmedienkanal zur Durchströmung mit einem Temperierungsmedium aufweist. Erfindungsgemäß wird in dem Temperierungsmedienkanal eine Leitschaufel einstückig mit dem Strangpressprofil ausgebildet.

In dem Temperierungsmedienkanal wird ein sich in Extrusionsrichtung erstreckender, einstückig mit dem Strangpressprofil ausgebildeter Steg angeordnet und die Leitschaufel wird durch einen sich im Wesentlichen senkrecht zur Extrusionsrichtung erstreckenden ersten Schnitt in dem Steg und einen sich im Wesentlichen in Extrusionsrichtung erstreckenden zweiten Schnitt in dem Steg definiert und wird entlang einer Biegekante aus der durch den Steg ausgebildeten Ebene in den Temperierungsmedienkanal hereingebogen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische, perspektivische Darstellung eines Temperierungselements zum Temperieren eines elektrischen Energiespeichers, und
- Figur 2: eine schematische, teilgeschnittene perspektivische Draufsicht des Temperierungselements der Figur 1, wobei die obere Hälfte des Strangpressprofils entfernt ist.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

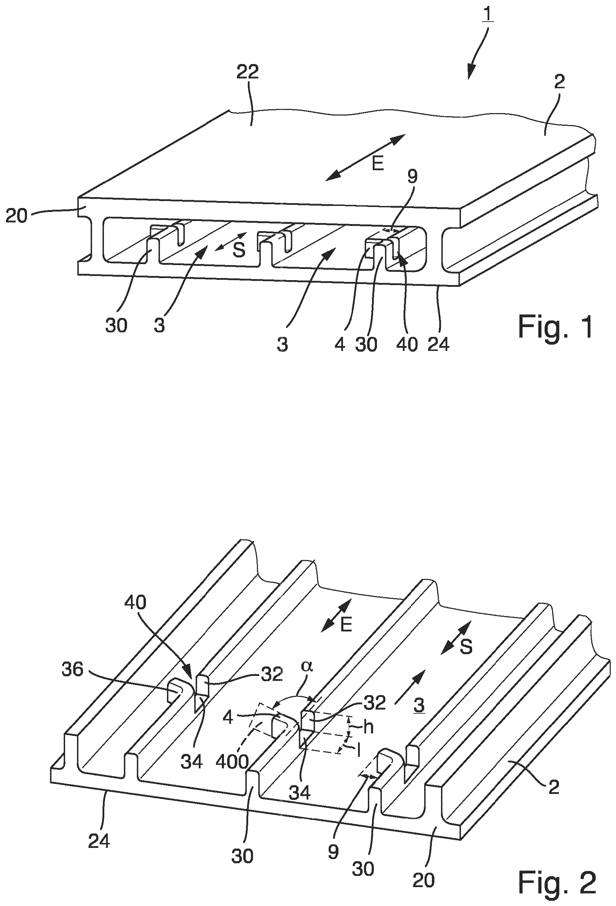

In Figur 1 ist in einer perspektivischen und schematischen Darstellung ein Temperierungselement 1 zum Temperieren eines elektrischen Energiespeichers, beispielsweise zum Temperieren einer Traktionsbatterie für ein Kraftfahrzeug, gezeigt.

Das Temperierungselement 1 umfasst ein Strangpressprofil 2, welches unter anderem eine Oberseite 22 und eine Unterseite 24 aufweist. Das Strangpressprofil 2 erstreckt sich in einer Extrusionsrichtung, die in Figur 1 durch den Pfeil E bezeichnet ist, und kann in Form eines Halbzeugs ausgebildet sein, welches schlussendlich zum Aufbau eines Temperierungselements 1 gemeinsam mit weiteren Komponenten versehen werden kann, beispielsweise mit in den Figuren nicht gezeigten Anschlussplatten zum Bereitstellen einer Zufuhr für ein Temperierungsmedium an einer der Stirnseiten 20 des Strangpressprofils 2.

Ein in den Figuren nicht gezeigter elektrischer Energiespeicher kann beispielsweise an der Oberseite 22 oder an der Unterseite 24 des Strangpressprofils 2 des Temperierungselements 1 angeordnet sein, um auf diese Weise einen Wärmeübertrag zwischen dem Temperierungselement 1 - insbesondere dem Strangpressprofil 2 - und dem elektrischen Energiespeicher zu erreichen. Das Temperierungselement 1 und damit das Strangpressprofil 2 kann auch zwischen Batteriemodulen eines elektrischen Energiespeichers angeordnet sein, so dass beispielsweise auch sowohl an der Oberseite 22 als auch an der Unterseite 24 des Strangpressprofils 2 jeweils ein Batteriemodul zur Temperierung des elektrischen Energiespeichers vorgesehen sein kann.

Beispielsweise kann eine Traktionsbatterie in wärmeleitendem Kontakt mit der Oberseite 22 oder mit der Unterseite 24 des Strangpressprofils 2 des Temperierungselements 1 stehen, um auf diese Weise eine Temperierung der Traktionsbatterie zu erreichen. Dabei können auch einzelne Batteriemodule der Traktionsbatterie in wärmeleitendem Kontakt mit dem Strangpressprofil 2 stehen.

In dem Strangpressprofil 2 ist ein Temperierungsmedienkanal 3 vorgesehen, welcher durch das Strangpressprofil 2 definiert ist. Das Strangpressprofil 2 bildet entsprechend entlang der Extrusionsrichtung E einen vollständig geschlossenen Umfang um den Temperierungsmedienkanal 3 herum aus, sodass lediglich an Stirnseiten 20 des Strangpressprofils 2 ein Zugang zu dem Temperierungsmedienkanal 3 vorgesehen ist.

Das Strangpressprofil 2 erstreckt sich entlang der Extrusionsrichtung E derart, dass der Temperierungsmedienkanal 3 entsprechend auch eine Strömungsrichtung S für ein das Temperierungselement 2 in dem Temperierungsmedienkanal 3 durchströmendes Temperierungsmedium definiert. Die Extrusionsrichtung E definiert damit entsprechend auch eine Strömungsrichtung S für ein Temperierungsmedium, entlang welcher ein Temperierungsmedium den Temperierungsmedienkanal 3 durchströmen kann. Das Temperierungsmedium kann beispielsweise ein erwärmtes oder gekühltes Fluid sein, mittels dessen ein Wärmetransport in dem Strangpressprofil 2 erreicht werden kann.

Mittels des Temperierungsmediums kann die Temperierung des das Strangpressprofil 2 umfassenden Temperierungselements 1 und damit auch eine Temperierung eines mit dem Strangpressprofil 2 in wärmeleitendem Kontakt stehenden elektrischen Energiespeichers erreicht werden, um den elektrischen Energiespeicher zu kühlen oder zu wärmen.

Das Strangpressprofil 2 weist in dem gezeigten Ausführungsbeispiel in dem Temperierungsmedienkanal 3 liegende Stege 30 auf, welche einstückig mit dem Strangpressprofil 2 ausgebildet sind und welche entsprechend zusammen mit dem Strangpressprofil extrudiert wurden.

Die in dem in Figur 1 gezeigten Ausführungsbeispiel gezeigten Stege 30 erstrecken sich nicht über die gesamte Höhe des Temperierungsmedienkanals 3, sondern erstrecken sich nur über einen Teilbereich dessen - in dem gezeigten Ausführungsbeispiel beispielsweise in etwa bis zur Hälfte der Höhe des Temperierungsmedienkanals 3.

In einem weiteren Ausführungsbeispiel, das hier nicht gezeigt ist, können sich die Stege 30 auch über eine geringere oder größere Höhe erstrecken oder den Zwischenraum zwischen der Oberseite 22 und der Unterseite 24 des Strangpressprofils 2 auch vollkommen durchspannen.

Die Stege 30 können zur mechanischen Aussteifung des Strangpressprofils 2 vorgesehen sein.

Die Stege 30 können auch dazu dienen, eine Führung des Temperierungsmediums innerhalb des Temperierungsmedienkanals 3 vorzunehmen.

Die Stege 30 können weiterhin auch eine Verwirbelung des Temperierungsmediums hervorrufen und können entsprechend dazu dienen, eine homogenere Verteilung des Temperierungsmediums innerhalb des Temperierungsmedienkanals 3 vorzunehmen. Auf diese Weise kann auch ein homogenerer Wärmeaustausch zwischen dem Temperierungsmedium und den unterschiedlichen räumlichen Abschnitten des Strangpressprofils 2 erreicht werden.

Um eine noch homogenere Verteilung des Temperierungsmediums in dem Temperierungsmedienkanal 3 zu erreichen, sind Leitschaufeln 4 einstückig mit dem Strangpressprofil 2 ausgebildet. Die Leitschaufeln 4 weisen jeweils mindestens eine sich quer zur Extrusionsrichtung E in den Temperierungsmedienkanal 3 hinein erstreckende Dimension q auf.

Damit weisen die Leitschaufeln 4 auch eine sich zur Strömungsrichtung S des Temperierungsmediums quer erstreckende Dimension q auf, die entsprechend eine Störung in den Temperierungsmedienstrom einbringt, welche eine Umwälzung beziehungsweise Verwirbelung des Temperierungsmediums im Temperierungsmedienkanal 3 nach sich zieht, welche zu einem noch homogeneren Wärmeaustausch zwischen der Oberseite 22 oder der Unterseite 24 des Temperierungselements 1 führt.

In Figur 2 ist das Temperierungselement 1 aus Figur 1 gezeigt, aber die Oberseite 22 des Strangpressprofils 2 wurde der besseren Darstellung wegen entfernt. Hier ist besonders gut zu erkennen, dass die Leitschaufeln 4 dadurch ausgebildet sind, dass in den Stegen 30 jeweils ein in Richtung der Höhenerstreckung des Stegs 30, also senkrecht zur Extrusionsrichtung E, eingebrachter erster Schnitt 32 sowie ein in Längsrichtung des Stegs 30, also auch in Extrusionsrichtung E, eingebrachter zweiter Schnitt 34 vorliegen und dann der auf diese Weise freigestellte Teil des Materials des Stegs 30 aus der durch den Steg 30 definierten Ebene herausgebogen wurden. Es ergibt sich entsprechend an der am Steg 30 verbleibenden Kante der jeweiligen Leitschaufel 4 eine Biegekante 36, an welcher die Leitschaufel 4 einstückig mit dem Steg 30 verbunden ist.

In einem weiteren Ausführungsbeispiel können auch zwei zweite Schnitte 34 vorgesehen sein, welche dann zwei gegenüberliegende Seiten der Leitschaufel 4 definieren. Diese Ausgestaltung ist besonders dann von Bedeutung, wenn der Steg 30 eine größere Höhe aufweist oder sich gar von der Oberseite 22 zu der Unterseite 24 erstreckt. Dann wird die Leitschaufel 4 einem Fenster gleich aus dem Steg herausgebogen.

Die Dimensionen der Leitschaufeln 4 ergeben sich daher im Wesentlichen aus der Höhe h des ersten Schnitts 32 in dem Steg 30 und aus Länge l des zweite Schnitts 34 entlang der Längserstreckung des Stegs 30. Wird die Länge I des zweiten Schnitts 34 verlängert, so kann auch die sich quer zur Strömungsrichtung S erstreckende Dimension q der Leitschaufel 4 vergrößert werden, so dass die Leitschaufel 4 dann entsprechend weiter beziehungsweise tiefer in den Temperierungsmedienkanal 3 hinein reicht und die durch die Leitschaufel 4 erzeugte Störung stärker ausgeprägt ist.

Die Dimensionierung des ersten Schnitts 32 und des zweiten Schnitts 34, sowie der Biegewinkel, unter welchem die jeweilige Leitschaufel 4 aus der durch den Steg 30 definierten Ebene herausgebogen wird, kann für jede Anwendungsform unterschiedlich ausgebildet werden.

Insbesondere ist es zur Ausbildung der sich quer zur Extrusionsrichtung E erstreckenden Dimension q der Leitschaufel 4 nicht notwendig, dass eine durch die Leitschaufel 4 ausgebildete Ebene 400 einen Winkel α von genau 90° mit der durch den Steg 30 ausbildeten Ebene 300 einschließt. Vielmehr sind unterschiedliche Winkel α zwischen der Ebene 400 der Leitschaufel 4 und der Ebene 300 des Stegs 30 möglich, beispielsweise Winkel α zwischen 10° und 170°, je nach gewünschter Anwendung oder gewünschtem Effekt.

Durch die auf diese Weise ausgebildete Ausprägung der Leitschaufel 4 wird Material aus der Ebene 300 des Stegs 30 entfernt und in den Temperierungsmedienkanal 3 herein gebogen. Damit ergibt sich in dem Bereich des Stegs 30, aus welchem die Leitschaufel 4 herausgebogen ist, eine Öffnung 40 in dem Steg 30, welche zu einem Austausch von Temperierungsmedium zwischen den beiden Seiten des Stegs 30 führen kann, so dass auf diese Weise eine weitere Durchmischung von Temperierungsmedium erfolgen kann, welche zu einer weiteren Homogenisierung des Wärmeübertrags führen kann.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

### Bezugszeichenliste

- 1: Temperierungselement
- 2: Strangpressprofil
- 20: Stirnseite
- 22: Oberseite des Strangpressprofils
- 24: Unterseite des Strangpressprofils
- 3: Temperierungsmedienkanal
- 30: Steg
- 32: erster Schnitt
- 34: zweiter Schnitt
- 36: Biegekante
- 300: durch den Steg ausgebildete Ebene
- 4: Leitschaufel
- 40: Öffnung
- 400: durch die Leitschaufel ausgebildete Ebene

- α: Winkel
- S: Strömungsrichtung
- E: Extrusionsrichtung
- q: Quererstreckung
- h: Höhe des ersten Schnitts
- l: Länge des zweiten Schnitts

## Patentansprüche

1. Temperierungselement (1) zum Temperieren eines elektrischen Energiespeichers, insbesondere zum Temperieren einer Traktionsbatterie eines Fahrzeugs, umfassend ein sich in einer Extrusionsrichtung (E) erstreckendes Strangpressprofil (2), welches einen Temperierungsmedienkanal (3) zur Durchströmung mit einem Temperierungsmedium aufweist,
**gekennzeichnet durch**
eine in dem Temperierungsmedienkanal (3) einstückig mit dem Strangpressprofil (2) ausgebildete Leitschaufel (4), wobei in dem Temperierungsmedienkanal (3) ein sich in Extrusionsrichtung (E) erstreckender, einstückig mit dem Strangpressprofil (2) ausgebildeter Steg (30) angeordnet ist und die Leitschaufel (4) einstückig mit dem Steg (30) ausgebildet ist, wobei die Leitschaufel (4) durch einen sich im Wesentlichen senkrecht zur Extrusionsrichtung (E) erstreckenden ersten Schnitt (32) in dem Steg (30) und einen sich im Wesentlichen in Extrusionsrichtung (E) erstreckenden zweiten Schnitt (34) in dem Steg (30) definiert ist und die Leitschaufel (4) entlang einer Biegekante (36) einstückig mit dem Steg (30) verbunden ist.

2. Temperierungselement (1) gemäß Anspruch 1, **dadurch gekennzeichnet, dass** die Leitschaufel (4) eine sich quer zur Extrusionsrichtung (E) erstreckende Dimension (q) aufweist.

3. Temperierungselement (1) gemäß Anspruch 1 oder 2, **dadurch gekennzeichnet, dass** eine durch die Leitschaufel (4) ausgebildete Ebene (400) mit der Extrusionsrichtung (E) einen Winkel (α) einschließt, insbesondere einen Winkel (α) zwischen 10° und 170°.

4. Temperierungselement (1) gemäß einem der vorstehenden Ansprüche, **dadurch gekennzeichnet, dass** mindestens zwei sich in Extrusionsrichtung (E) erstreckende zweite Schnitte (34) in dem Steg (30) vorgesehen sind, die gegenüberliegende Seiten der Leitschaufel (4) definieren.

5. Temperierungselement (1) gemäß einem der vorstehenden Ansprüche, **dadurch gekennzeichnet, dass** eine durch die Leitschaufel (4) ausgebildete Ebene (400) mit einer durch den Steg (30) gebildeten Ebene (300) einen Winkel (α) einschließt, insbesondere einen Winkel (α) zwischen 10° und 170°.

6. Temperierungselement (1) gemäß einem der vorstehenden Ansprüche, **dadurch gekennzeichnet, dass** anschließend an die Leitschaufel (4) eine Öffnung (40) in dem Steg (30) vorgesehen ist.

7. Temperierungselement (1) gemäß einem der vorstehenden Ansprüche, **dadurch gekennzeichnet, dass** mindestens zwei Leitschaufeln (4) vorgesehen sind, die parallel zueinander ausgerichtete Ebenen (400) aufweisen.

8. Temperierungselement (1) gemäß einem der vorstehenden Ansprüche, **dadurch gekennzeichnet, dass** mehrere einstückig mit dem Strangpressprofil (2) ausgebildete Leitschaufeln (4) zum Bereitstellen einer Rippenstruktur vorgesehen sind.

9. Verfahren zum Bereitstellen eines Temperierungselements (1) zum Temperieren eines elektrischen Energiespeichers, insbesondere zum Temperieren einer Traktionsbatterie eines Fahrzeuges, wobei ein sich in einer Extrusionsrichtung (E) erstreckendes Strangpressprofil (2) bereit gestellt wird, welches einen Temperierungsmedienkanal (3) zur Durchströmung mit einem Temperierungsmedium aufweist,
**dadurch gekennzeichnet, dass**
in dem Temperierungsmedienkanal (3) eine Leitschaufel (4) einstückig mit dem Strangpressprofil (2) ausgebildet wird, wobei
in dem Temperierungsmedienkanal (3) ein sich in Extrusionsrichtung (E) erstreckender, einstückig mit dem Strangpressprofil (2) ausgebildeter Steg (30) angeordnet ist und die Leitschaufel (4) durch einen sich im Wesentlichen senkrecht zur Extrusionsrichtung (E) erstreckenden ersten Schnitt (32) in dem Steg (30) und einen sich im Wesentlichen in Extrusionsrichtung (E) erstreckenden zweiten Schnitt (34) in dem Steg (30) definiert wird und entlang einer Biegekante (36) aus der durch den Steg (30) ausgebildeten Ebene (300) in den Temperierungsmedienkanal (3) hereingebogen wird.

## Claims

1. Temperature-control element (1) for controlling the temperature of an electrical accumulator, in particular for controlling the temperature of a traction battery of a vehicle, comprising an extruded profile (2) extending in an extrusion direction (E) which has a temperature-control medium channel (3) for passage of a temperature-control medium,
**characterized by**
a guide vane (4) integrally formed with the extruded profile (2) in the temperature-control medium channel (3), wherein a rib (30) extending in the extrusion direction (E) and integrally formed with the extruded profile (2) is arranged in the temperature-control medium channel (3) and the guide vane (4) is integrally formed with the rib (30), wherein the guide vane (4) is defined by a first cut (32) in the rib (30) extending substantially perpendicularly to the extrusion direction (E) and a second cut (34) in the rib (30) extending substantially in the extrusion direction (E) and the guide vane (4) is integrally connected to the rib (30) along a bending edge (36).

2. Temperature-control element (1) according to Claim 1, **characterized in that** the guide vane (4) has a dimension (q) extending transversely to the extrusion direction (E).

3. Temperature-control element (1) according to Claim 1 or 2, **characterized in that** a plane (400) formed by the guide vane (4) forms an angle (α), in particular an angle (α) of between 10° and 170°, with the extrusion direction (E) .

4. Temperature-control element (1) according to one of the preceding claims, **characterized in that** at least two second cuts (34) in the rib (30) extending in the extrusion direction (E) are provided which define opposite sides of the guide vane (4).

5. Temperature-control element (1) according to one of the preceding claims, **characterized in that** a plane (400) formed by the guide vane (4) forms an angle (α), in particular an angle (α) of between 10° and 170°, with a plane (300) formed by the rib (30).

6. Temperature-control element (1) according to one of the preceding claims, **characterized in that** an opening (40) in the rib (30) is then provided at the guide vane (4).

7. Temperature-control element (1) according to one of the preceding claims, **characterized in that** at least two guide vanes (4) are provided which have planes (400) oriented parallel to one another.

8. Temperature-control element (1) according to one of the preceding claims, **characterized in that** a plurality of guide vanes (4) integrally formed with the extruded profile (2) are provided for providing a ribbed structure.

9. Method for providing a temperature-control element (1) for controlling the temperature of an electrical accumulator, in particular for controlling the temperature of a traction battery of a vehicle, wherein an extruded profile (2) extending in an extrusion direction (E) which has a temperature-control medium channel (3) for passage of a temperature-control medium is provided,
**characterized in that**
a guide vane (4) is integrally formed with the extruded profile (2) in the temperature-control medium channel (3), wherein
a rib (30) extending in the extrusion direction (E) and integrally formed with the extruded profile (2) is arranged in the temperature-control medium channel (3) and the guide vane (4) is defined by a first cut (32) in the rib (30) extending substantially perpendicularly to the extrusion direction (E) and a second cut (34) in the rib (30) extending substantially in the extrusion direction (E) and is bent along a bending edge (36) out from the plane (300) formed by the rib (30) into the temperature-control medium channel (3).

## Revendications

1. Élément de régulation de température (1) pour réguler la température d'un accumulateur d'énergie électrique, en particulier pour réguler la température d'une batterie de traction d'un véhicule, comprenant un profilé extrudé (2) s'étendant dans une direction d'extrusion (E), lequel présente un canal de fluide de régulation de température (3) destiné à l'écoulement d'un fluide de régulation de température,
**caractérisé par**
une aube fixe (4) formée d'une seule pièce avec le profilé extrudé (2) dans le canal de fluide de régulation de température (3), une nervure (30) formée d'une seule pièce avec le profilé extrudé (2), s'étendant dans la direction d'extrusion (E), étant disposée dans le canal de fluide de régulation de température (3) et l'aube fixe (4) étant formée d'une seule pièce avec la nervure (30), l'aube fixe (4) étant définie par une première coupe (32) s'étendant sensiblement perpendiculairement à la direction d'extrusion (E) dans la nervure (30) et une deuxième coupe (34) s'étendant sensiblement dans la direction d'extrusion (E) dans la nervure (30) et l'aube fixe (4) étant reliée d'une seule pièce à la nervure (30) le long d'une arête de pliage (36).

2. Élément de régulation de température (1) selon la revendication 1, **caractérisé en ce que** l'aube fixe (4) présente une dimension (q) s'étendant transversalement à la direction d'extrusion (E).

3. Élément de régulation de température (1) selon la revendication 1 ou 2, **caractérisé en ce qu'**un plan (400) formé par l'aube fixe (4) forme avec la direction d'extrusion (E) un angle (α), en particulier un angle (α) compris entre 10 ° et 170 °.

4. Élément de régulation de température (1) selon l'une des revendications précédentes, **caractérisé en ce qu'**au moins deux deuxièmes coupes (34) s'étendant dans la direction d'extrusion (E) sont prévues dans la nervure (30), lesquelles définissent des côtés opposés de l'aube fixe (4).

5. Élément de régulation de température (1) selon l'une des revendications précédentes, **caractérisé en ce qu'**un plan (400) formé par l'aube fixe (4) forme avec un plan (300) formé par la nervure (30) un angle (α), en particulier un angle (α) compris entre 10 ° et 170 °.

6. Élément de régulation de température (1) selon l'une des revendications précédentes, **caractérisé en ce qu'**une ouverture (40) est prévue dans la nervure (30) de manière adjacente à l'aube fixe (4).

7. Élément de régulation de température (1) selon l'une des revendications précédentes, **caractérisé en ce qu'**au moins deux aubes fixes (4) sont prévues, lesquelles présentent des plans (400) orientés parallèlement les uns aux autres.

8. Élément de régulation de température (1) selon l'une des revendications précédentes, **caractérisé en ce que** plusieurs aubes fixes (4) formées d'une seule pièce avec le profilé extrudé (2) sont prévues pour produire une structure à ailettes.

9. Procédé pour fournir un élément de régulation de température (1) pour réguler la température d'un accumulateur d'énergie électrique, en particulier pour réguler la température d'une batterie de traction d'un véhicule, un profilé extrudé (2) s'étendant dans une direction d'extrusion (E) étant fourni, lequel présente un canal de fluide de régulation de température (3) destiné à l'écoulement d'un fluide de régulation de température,
**caractérisé en ce**
**qu'**une aube fixe (4) est formée d'une seule pièce avec le profilé extrudé (2) dans le canal de fluide de régulation de température (3), dans lequel
une nervure (30) formée d'une seule pièce avec le profilé extrudé (2), s'étendant dans la direction d'extrusion (E), est disposée dans le canal de fluide de régulation de température (3) et l'aube fixe (4) est définie par une première coupe (32) s'étendant sensiblement perpendiculairement à la direction d'extrusion (E) dans la nervure (30) et une deuxième coupe (34) s'étendant sensiblement dans la direction d'extrusion (E) dans la nervure (30) et est pliée le long d'une arête de pliage (36) hors du plan (300) formé par la nervure (30) dans le canal de fluide de régulation de température (3).
